# EUROPÄISCHE PATENTSCHRIFT

(11) **EP 4 299 350 B1**
(45) Veröffentlichungstag und Bekanntmachung des Hinweises auf die Patenterteilung: **12.02.2025**
(21) Anmeldenummer: 23174526.6
(22) Anmeldetag: 22.05.2023
(51) Int. Cl.: B60K 1/00, B60K 11/02, H02K 5/20

(54) **ANTRIEBSANORDNUNG, VERFAHREN ZUR ERZEUGUNG EINER ANTRIEBSANORDNUNG UND EIN FAHRZEUG MIT EINER ANTRIEBSANORDNUNG**
DRIVE ASSEMBLY, METHOD FOR PRODUCING A DRIVE ASSEMBLY AND A VEHICLE HAVING A DRIVE ASSEMBLY
SYSTÈME D'ENTRAÎNEMENT, PROCÉDÉ DE PRODUCTION D'UN SYSTÈME D'ENTRAÎNEMENT ET VÉHICULE DOTÉ D'UN SYSTÈME D'ENTRAÎNEMENT

(30) Priorität: 27.06.2022 DE 102022206440
(43) Veröffentlichungstag der Anmeldung: 03.01.2024
(73) Patentinhaber: Robert Bosch GmbH, 70442 Stuttgart (DE)
(72) Erfinder: Boettinger, Theresa Sophia, 70180 Stuttgart (DE); Tremel, Jan, 91058 Erlangen (DE); Breinlinger, Philipp, 76137 Karlsruhe (DE); Kolb, Tobias, 90427 Nuernberg (DE); Loeber, Lukas, 71638 Ludwigsburg (DE)

(56) Entgegenhaltungen:
- EP-A1- 3 937 353
- DE-A1- 102020 211 432
- DE-U1- 202017 003 396
- US-A1- 2016 164 378
- US-A1- 2021 394 600

## Beschreibung

### Stand der Technik

Die Erfindung betrifft eine Antriebsanordnung für ein Fahrzeug mit Merkmalen des Anspruchs 1, ein Verfahren zur Erzeugung einer Antriebsanordnung mit Merkmalen des Anspruchs 8, sowie ein Fahrzeug mit einer Antriebsanordnung mit Merkmalen des Anspruchs 10.

Ein elektrischer Achsantrieb (E-Achse) besteht im Wesentlichen aus einer Leistungselektronik, einer elektrischen Maschine und einem Getriebe. Ein derartiger Antrieb ist bspw. in DE 20 2017 003 396 U1 gezeigt.

Die im Getriebe erzeugte Wärme kann bspw. mit einem externen Wärmetauscher abgeführt werden. Dies kann bspw. bei einer komplett ölgekühlten Maschine notwendig sein.

Nachteilig dabei ist, dass ein zusätzlicher Wärmetauscher hohe Kosten erzeugen kann, da dieser in der Regel eine mechanische oder elektrische Pumpe erfordert. Zudem muss der Wärmetauscher mit zusätzlichen Leitungen bzw. Kanälen angeschlossen werden. Ein (externer) Wärmetauscher benötigt zusätzlichen Bauraum, der nicht immer zur Verfügung gestellt werden kann.

Eine Antriebsanordnung gemäß dem Oberbegriff des Anspruchs 1 ist aus US 2021/394600 A1 bekannt.

### Offenbarung der Erfindung

Erfindungsgemäß wird eine Antriebsanordnung für ein Fahrzeug, insbesondere für ein Elektrofahrzeug, vorgeschlagen, umfassend mindestens eine elektrische Maschine zur Erzeugung eines Drehmoments und mindestens ein mit der elektrischen Maschine gekoppeltes Getriebe zur Übertragung und/oder Übersetzung des von der elektrischen Maschine erzeugten Drehmoments. Das Getriebe ist insbesondere derart mit der elektrischen Maschine gekoppelt, dass das Getriebe mittels der elektrischen Maschine drehend angetrieben werden kann.

Die Antriebsanordnung umfasst zudem ein Gehäuse, in dem die elektrische Maschine und das Getriebe angeordnet sind, wobei zwischen der elektrischen Maschine und dem Getriebe eine Zwischenwandung des Gehäuses angeordnet ist. Das Gehäuse kann als Gussteil, insbesondere als Aluminiumdruckgussteil, ausgebildet sein.

Die Antriebsanordnung umfasst weiter mindestens ein in das Gehäuse eingegossenes Einlegeteil mit mindestens einer Hohlraumstruktur zur Erzeugung mindestens eines Kühlkanals. Die Hohlraumstruktur kann in sich abgeschlossen sein. Das Einlegeteil ist an oder in der Zwischenwandung des Gehäuses angeordnet.

Das Einlegeteil kann derart an oder in der Zwischenwandung angeordnet sein, dass die Zwischenwandung das Einlegeteil zumindest teilweise oder vollständig einbettet. Die Zwischenwandung kann insbesondere als Lagerwand (Lager A-Seite (ALS)) ausgebildet sein. Die mittels des Einlegeteils erzeugte Hohlraumstruktur innerhalb der Zwischenwandung kann mindestens einen Kühlkanal darstellen und zur Kühlung der Zwischenwandung genutzt werden. So kann die Zwischenwandung zwischen der bspw. trocken (ohne Öl) laufenden elektrischen Maschine und dem bspw. mit Öl befüllten Getriebe gekühlt werden.

Das Einlegeteil kann mittels additiver Fertigung (bspw. L-PBF-M (Powderbed fusion of metals with laser)) erzeugt werden. Das Einlegeteil kann aus einer metallischen Legierung gefertigt sein, welche eine gute Wärmeleistung aufweist. Dies kann bspw. eine Aluminiumbasislegierung sein. Denkbar ist auch eine Fertigung mit einer Eisenbasislegierung (Stahl). Insbesondere aufgrund der flexiblen Produktion der additiven Fertigung lassen sich Hohlraumstrukturen mit komplexen, unterschiedlichen Geometrien in einem äußerlich gleichen Einlegeteil realisieren. Dadurch kann eine hohe Formvarianz realisiert werden.

Die Antriebsanordnung kann eine Leistungselektronik (bzw. ein Steuermodul/Steuergerät) zur Steuerung der elektrischen Maschine und/oder eine Parksperre zum Blockieren der Drehmomentübertragung aufweisen.

Die Antriebsanordnung kann bspw. als E-Achse ausgebildet sein oder Bestandteil einer E-Achse bilden.

Gemäß einer Weiterbildung kann das Einlegeteil einen flächigen, insbesondere in einer Ebene erstreckten, insbesondere ebenen, Grundkörper aufweisen. Der Grundkörper kann abgerundete Bereiche und/oder Kanten aufweisen. Der Grundkörper kann rund oder rechteckig ausgebildet sein. Die Hohlraumstruktur kann innerhalb des Grundkörpers verlaufen. Die Hohlraumstruktur innerhalb des Grundkörpers kann eine gewundene und/oder gerade verlaufende Form (Kontur) aufweisen.

Gemäß einer Weiterbildung kann das Einlegeteil einen Ausleger aufweisen. Der Ausleger kann vom Grundkörper abragen (abstehen). Der Ausleger kann orthogonal zum Grundkörper orientiert sein. Die Hohlraumstruktur kann innerhalb des Auslegers verlaufen. Damit können auch schwer erreichbare Stellen und/oder Hotspots der zu kühlenden Komponente (bspw. Getriebe) erreicht und gekühlt werden.

Gemäß einer Weiterbildung kann das Einlegeteil mindestens einen Durchbruch (bzw. Aussparung) aufweisen. Das Einlegeteil kann mehrere Durchbrüche bzw. Aussparungen aufweisen. Der Durchbruch oder die Durchbrüche können das Einlegeteil außerhalb der Hohlraumstruktur durchdringen. Der Durchbruch oder die Durchbrüche können vollständig im Grundkörper des Einlegeteils angeordnet sein (bzw. innerhalb des Grundkörpers verlaufen).

Durch die Durchbrüche in dem Einlegeteil kann die Anbindung an das Gehäuse (Gussteil) erfolgen und Material bei der kostenintensiven additiven Herstellung des Einlegeteils eingespart werden. Zusätzlich kann so die Kühlleistung erhöht werden (größere Kontaktflächen zwischen dem Einlegeteil und dem Gehäuse bzw. dessen Zwischenwandung).

Gemäß einer Weiterbildung kann das Einlegeteil aus zwei zusammengefügten, bspw. gelöteten und/oder geschweißten, Blechen hergestellt sein.

Das Einlegeteil kann mittels Topologie-Optimierungs-Software bezüglich Masse und Belastungspfaden optimiert werden, um Fertigungskosten einzusparen.

Gemäß einer Weiterbildung kann das Einlegeteil ein durch Innenhochdruck und/oder ein durch ein Hydroforming-Verfahren erzeugtes Bauteil sein.

Minimale Wandstärken des Einlegeteils können abhängig von der Aufbau-Orientierung, Fertigungsparametern und der Technologie-, der Material-Auswahl und dem angelegten hydrodynamischen Druck eine Stärke von minimal 300 µm (ohne Obergrenze) aufweisen. Durch den materialsparenden Einsatz können Fertigungskosten eingespart werden.

Gemäß einer Weiterbildung kann die Antriebsanordnung einen Kühlkreislauf zur Kühlung der elektrischen Maschine umfassen. Der durch das Einlegeteil erzeugte Kühlkanal kann mit dem Kühlkreislauf der elektrischen Maschine strömungsverbunden (bzw. fluidisch verbunden) sein. Damit kann mittels des Kühlkreislaufs der elektrischen Maschine die Zwischenwandung und damit das Getriebe gekühlt werden.

Mit einer fluidischen Verbindung oder Strömungsverbindung ist vorliegend gemeint, dass ein Gas und/oder ein Fluid (Flüssigkeit) zwischen zwei fluidisch gekoppelten oder strömungsverbundenen Elementen bzw. zwischen zwei in fluidischer Verbindung oder Strömungsverbindung stehender Elemente fließen kann.

Erfindungsgemäß wird ein Verfahren zur Erzeugung einer Antriebsanordnung, insbesondere einer Antriebsanordnung gemäß obiger Ausführungen, vorgeschlagen. Hinsichtlich der damit erzielbaren Vorteile wird auf die diesbezüglichen Ausführungen zur Antriebsanordnung verwiesen. Zur weiteren Ausgestaltung des Verfahrens können die im Zusammenhang mit der Antriebsanordnung beschriebenen und/oder die nachfolgend noch erläuterten Maßnahmen dienen.

### Das Verfahren umfasst die Schritte:

Bereitstellen einer elektrischen Maschine zur Erzeugung eines Drehmoments.

Bereitstellen eines mit der elektrischen Maschine gekoppelten Getriebes zur Übertragung und/oder Übersetzung des von der elektrischen Maschine erzeugten Drehmoments.

Bereitstellen eines Gehäuses zur Aufnahme der elektrischen Maschine und des Getriebes.

Bereitstellen eines Einlegeteils mit mindestens einer, insbesondere in sich abgeschlossenen, Hohlraumstruktur zur Erzeugung mindestens eines Kühlkanals.

Füllen der Hohlraumstruktur mit einem Füllmedium, insbesondere mit metallischem Pulver.

Eingießen des Einlegeteils in das Gehäuse, insbesondere in eine Zwischenwandung des Gehäuses. Das Einlegeteil wird insbesondere teilweise oder komplett umgossen.

Anbohren und/oder Anfräsen der Hohlraumstruktur des Einlegeteils, so dass die, insbesondere in sich abgeschlossene, Hohlraumstruktur zugänglich ist.

Entfernen des Füllmediums aus der Hohlraumstruktur des Einlegeteils.

Das Füllmedium innerhalb der Hohlraumstruktur des Einlegeteils verhindert insbesondere, dass die Hohlraumstruktur im Druckgussprozess zerstört wird. Das Einlegeteil kann auch nach dem Druckgussprozess montiert werden. Das Gehäuse kann in einem Aluminiumdruckgussprozess hergestellt werden, wobei das Einlegeteil eingelegt und komplett umgossen werden kann.

Zu geeignetem Zeitpunkt kann eine Montage der Antriebsanordnung erfolgen, insbesondere ein Anbau und/oder Einbau von Komponenten, bspw. der elektrischen Maschine, dem Getriebe und ggf. weiteren Komponenten, an oder in das Gehäuse der Antriebsanordnung. Dies kann bspw. nach Entfernen des Füllmediums aus der Hohlraumstruktur erfolgen.

Gemäß einer Weiterbildung kann das Verfahren weiter den Schritt umfassen:
Strömungsverbinden (bzw. fluidisches Verbinden/Koppeln) der Hohlraumstruktur des Einlegeteils mit einem, insbesondere zur Kühlung der elektrischen Maschine vorgesehenen, Kühlkreislauf. Bei dem Kühlkreislauf der elektrischen Maschine kann es sich um einen Kühlkreislauf mit Flüssigkeit, bspw. einen Wasserkühlkreislauf, handeln.

Erfindungsgemäß wird ein Fahrzeug, insbesondere ein Elektrofahrzeug, mit einer Antriebsanordnung gemäß obiger Ausführungen vorgeschlagen. Hinsichtlich der damit erzielbaren Vorteile wird auf die diesbezüglichen Ausführungen zur Antriebsanordnung verwiesen. Zur weiteren Ausgestaltung des Fahrzeugs können die im Zusammenhang mit der Antriebsanordnung beschriebenen und/oder die nachfolgend noch erläuterten Maßnahmen dienen.

Nachfolgend werden Ausführungsformen der Erfindung unter Bezugnahme auf die beiliegenden Zeichnungen erläutert. Es zeigen:
- Figur 1: eine perspektivische Ansicht auf eine Antriebsanordnung;
- Figur 2: einen Ausschnitt einer Schnittansicht der Antriebsanordnung gemäß Figur 1 mit einem vergrößerten Ausschnitt;
- Figur 3: eine perspektivische Schnittdarstellung eines ersten Ausführungsbeispiels eines Einlegeteils;
- Figur 4: eine perspektivische Darstellung eines zweiten Ausführungsbeispiels des Einlegeteils; und
- Figur 5: eine perspektivische Darstellung eines dritten Ausführungsbeispiels des Einlegeteils.

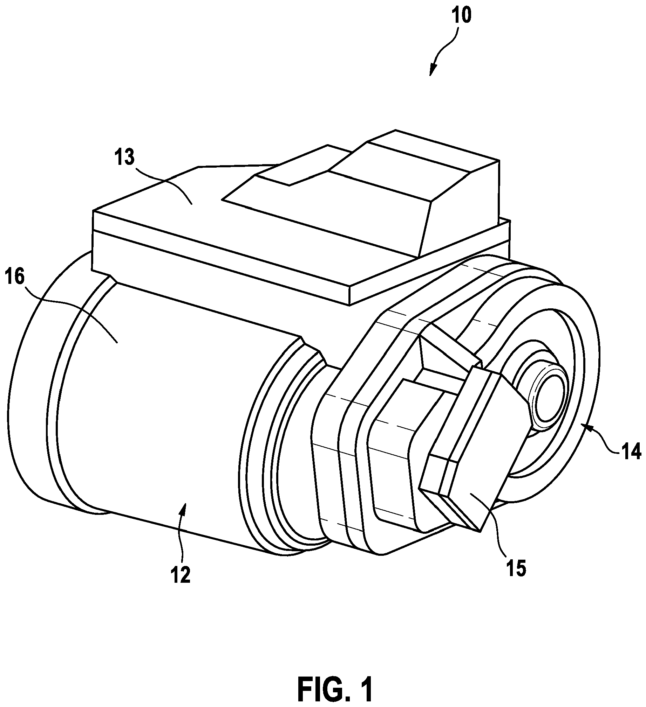

Figur 1 zeigt eine perspektivische Ansicht auf eine Antriebsanordnung 10. Die Antriebsanordnung 10 umfasst eine elektrische Maschine 12 zur Erzeugung eines Drehmoments und ein mit der elektrischen Maschine 12 gekoppeltes Getriebe 14 zur Übertragung und/oder Übersetzung des von der elektrischen Maschine 12 erzeugten Drehmoments. Die elektrische Maschine 12 und das Getriebe 14 sind in einem Gehäuse 16 angeordnet.

Die Antriebsanordnung 10 weist vorliegend eine Leistungselektronik 13 (bzw. ein Steuermodul) zur Steuerung und/oder Regelung der Antriebsanordnung 10 auf. Die Antriebsanordnung 10 weist zudem vorliegend eine Parksperre 15 zum Blockieren der Drehmomentübertragung auf.

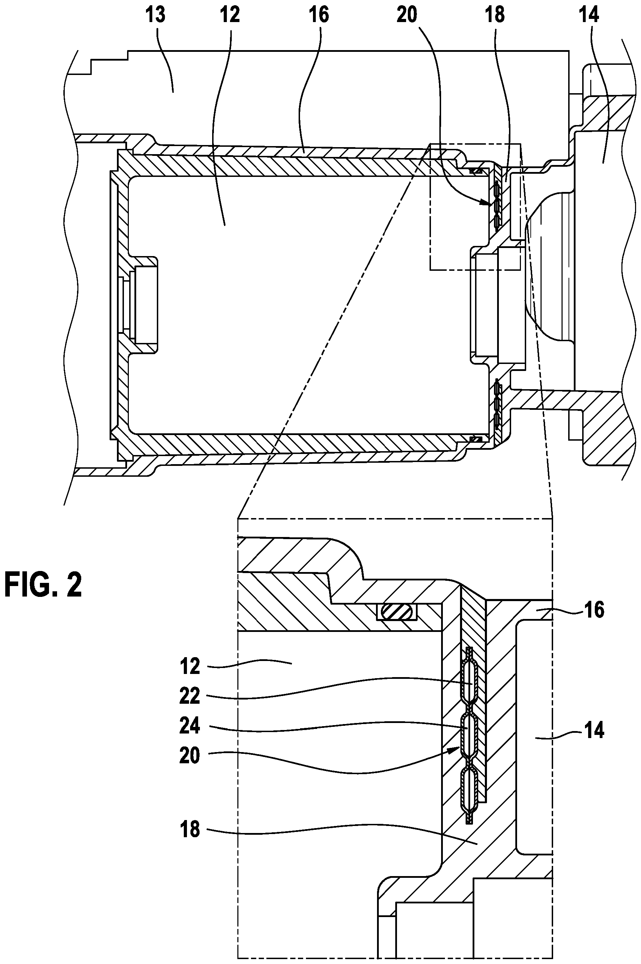

Figur 2 zeigt einen Ausschnitt einer Schnittansicht der Antriebsanordnung 10 gemäß Figur 1. Der besseren Übersicht halber ist zudem ein Ausschnitt vergrößert dargestellt.

Das Gehäuse 16 weist eine Zwischenwandung 18 auf, die zwischen der elektrischen Maschine 12 und dem Getriebe 14 angeordnet ist. In die Zwischenwandung 18 ist ein Einlegeteil 20 vollständig eingegossen. Das Einlegeteil 20 ist also vollständig innerhalb der Zwischenwandung 18 angeordnet. Das Einlegeteil 20 weist eine Hohlraumstruktur 22 zur Erzeugung mindestens eines Kühlkanals 24 auf.

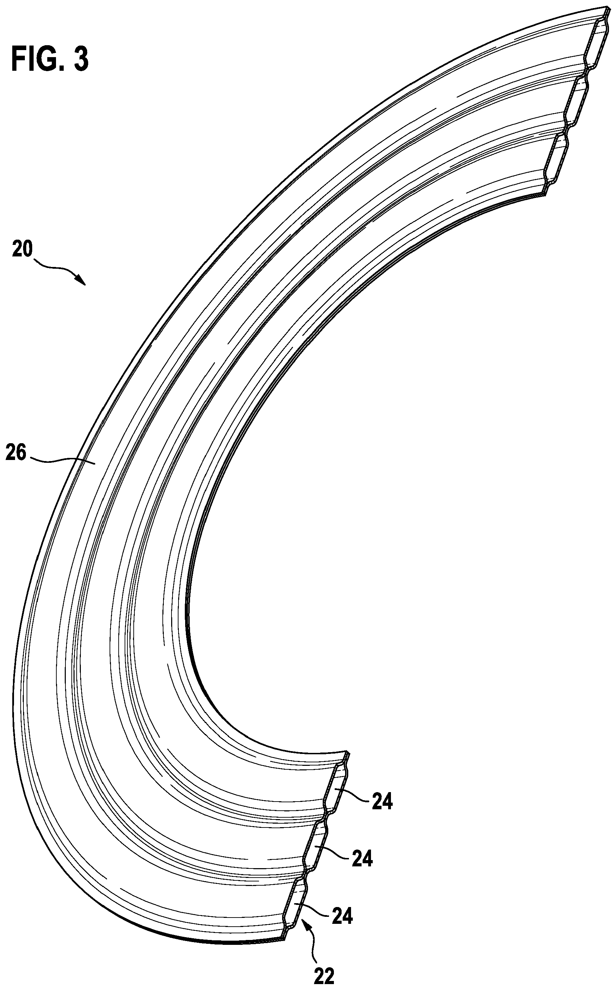

Figur 3 zeigt eine perspektivische Schnittdarstellung eines ersten Ausführungsbeispiels des Einlegeteils 20. Das dargestellte Einlegeteil 20 entspricht dem Einlegeteil 20 aus Figur 2. Das Einlegeteil weist einen flächigen, kreisförmigen Grundkörper 26 auf. Es ist ein Schnitt entlang des Durchmessers des kreisförmig ausgebildeten Einlegeteils 22 dargestellt. Die Hohlraumstruktur 22 ist in Form von drei kreisbogenförmig verlaufenden Kanälen (spätere Kühlkanäle 24) ausgebildet.

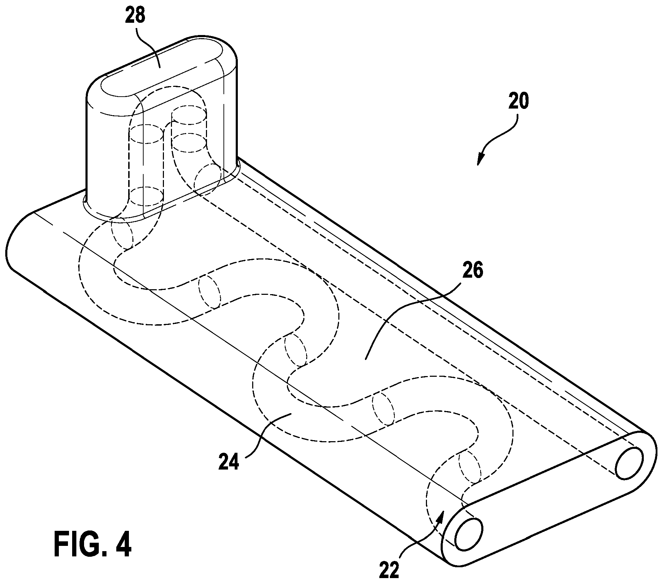

Figur 4 zeigt eine perspektivische Darstellung eines zweiten Ausführungsbeispiels des Einlegeteils 20. Das Einlegeteil 20 gemäß dem zweiten Ausführungsbeispiel weist einen flächigen, im Wesentlichen rechteckförmigen Grundkörper 26 auf. Einige Ecken und/oder Kanten des Grundkörpers 26 sind abgerundet ausgebildet. Das Einlegeteil 20 weist einen Ausleger 28 auf, der vorliegend senkrecht vom Grundkörper 26 abfragt.

Die Hohlraumstruktur 22 weist einen Kanal (späterer Kühlkanal 24) auf, der abschnittsweise eine geschlängelte (gewundene), insbesondere mäanderartig verlaufende, Form aufweist und abschnittsweise gerade (geradlinig) ausgebildet ist. Die Hohlraumstruktur 22 erstreckt sich ebenfalls durch den Ausleger 28.

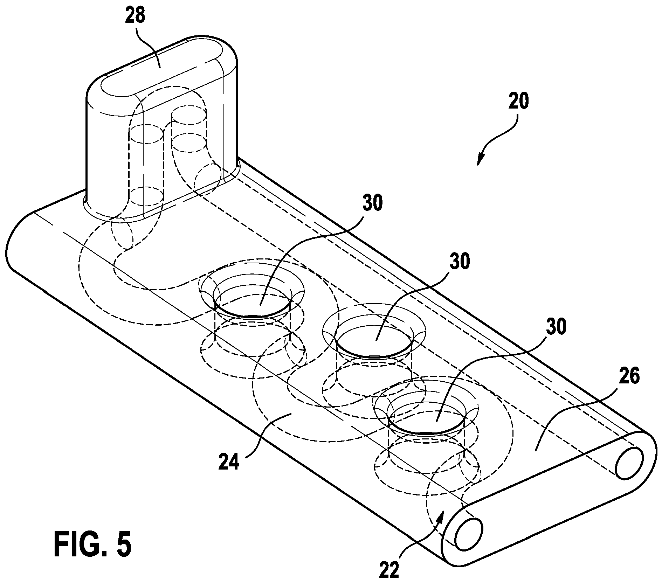

Figur 5 zeigt eine perspektivische Darstellung eines dritten Ausführungsbeispiels des Einlegeteils 20. Das dritte Ausführungsbeispiel des Einlegers 20 unterscheidet sich von dem in Figur 4 gezeigten zweiten Ausführungsbeispiel dadurch, dass das Einlegeteil 20 gemäß dem dritten Ausführungsbeispiel drei Durchbrüche 30 aufweist.

Die drei Durchbrüche 30 sind im Grundkörper 26 des Einlegeteils 20 angeordnet und erstrecken sich durch die gesamte Dicke des Grundkörpers 26. Die drei Durchbrüche 30 sind außerhalb der Hohlraumstruktur 22 (bzw. deren späteren Kühlkanals 24) angeordnet. Die Hohlraumstruktur 22 (bzw. deren späterer Kühlkanal 24) schlängelt sich vorliegend um die Durchbrüche 30 herum. Hierdurch kann die Kühlwirkung nochmals erhöht werden.

## Patentansprüche

1. Antriebsanordnung (10) für ein Fahrzeug, insbesondere für ein Elektrofahrzeug, umfassend:
- mindestens eine elektrische Maschine (12) zur Erzeugung eines Drehmoments,
- mindestens ein mit der elektrischen Maschine (12) gekoppeltes Getriebe (14) zur Übertragung und/oder Übersetzung des von der elektrischen Maschine (12) erzeugten Drehmoments,
- ein Gehäuse (16), in dem die elektrische Maschine (12) und das Getriebe (14) angeordnet sind, wobei zwischen der elektrischen Maschine (12) und dem Getriebe (14) eine Zwischenwandung (18) des Gehäuses (16) angeordnet ist, **dadurch gekennzeichnet, dass** ,
- mindestens ein in das Gehäuse (16) eingegossenes Einlegeteil (20) mit mindestens einer, insbesondere in sich abgeschlossenen, Hohlraumstruktur (22) zur Erzeugung mindestens eines Kühlkanals (24), wobei das Einlegeteil (20) an oder in der Zwischenwandung (18) des Gehäuses (16) angeordnet ist.

2. Antriebsanordnung (10) nach Anspruch 1, **dadurch gekennzeichnet, dass** das Einlegeteil (20) einen flächigen Grundkörper (26) aufweist.

3. Antriebsanordnung (10) nach Anspruch 2, **dadurch gekennzeichnet, dass** das Einlegeteil (20) einen Ausleger (28) aufweist, wobei der Ausleger (28) vom Grundkörper (26) abragt, insbesondere orthogonal zum Grundkörper (26) orientiert ist.

4. Antriebsanordnung (10) nach einem der voranstehenden Ansprüche, **dadurch gekennzeichnet, dass** das Einlegeteil (20) mindestens einen Durchbruch (30), insbesondere mehrere Durchbrüche (30), aufweist, wobei der Durchbruch (30), das Einlegeteil (20) außerhalb der Hohlraumstruktur (22) durchdringt, wobei der Durchbruch (30) insbesondere vollständig im Grundkörper (26) des Einlegeteils (20) angeordnet ist.

5. Antriebsanordnung (10) nach einem der voranstehenden Ansprüche, **dadurch gekennzeichnet, dass** das Einlegeteil (20) aus zwei zusammengefügten Blechen hergestellt ist.

6. Antriebsanordnung (10) nach einem der Ansprüche 1 bis 4, **dadurch gekennzeichnet, dass** das Einlegeteil (20) ein durch Innenhochdruck und/oder Hydroforming erzeugtes Bauteil ist.

7. Antriebsanordnung (10) nach einem der voranstehenden Ansprüche, **dadurch gekennzeichnet, dass** die Antriebsanordnung (10) einen Kühlkreislauf zur Kühlung der elektrischen Maschine (12) umfasst, wobei der durch das Einlegeteil (20) erzeugte Kühlkanal (24) mit dem Kühlkreislauf der elektrischen Maschine (12) strömungsverbunden ist.

8. Verfahren zur Erzeugung einer Antriebsanordnung nach einem der voranstehenden Ansprüche, umfassend die Schritte:
- Bereitstellen einer elektrischen Maschine (12) zur Erzeugung eines Drehmoments;
- Bereitstellen eines mit der elektrischen Maschine (12) gekoppelten Getriebes (14) zur Übertragung und/oder Übersetzung des von der elektrischen Maschine (12) erzeugten Drehmoments;
- Bereitstellen eines Gehäuses (16) zur Aufnahme der elektrischen Maschine (12) und des Getriebes (14);
- Bereitstellen eines Einlegeteils (20) mit mindestens einer, insbesondere in sich abgeschlossenen, Hohlraumstruktur (22) zur Erzeugung mindestens eines Kühlkanals (24);
- Füllen der Hohlraumstruktur (22) mit einem Füllmedium, insbesondere mit metallischem Pulver;
- Eingießen des Einlegeteils (20) in das Gehäuse (16), insbesondere in eine Zwischenwandung (18) des Gehäuses (16);
- Anbohren und/oder Anfräsen der Hohlraumstruktur (22) des Einlegeteils (20); und
- Entfernen des Füllmediums aus der Hohlraumstruktur (22) des Einlegeteils (20).

9. Verfahren nach Anspruch 8, **dadurch gekennzeichnet, dass** das Verfahren weiter den Schritt umfasst:
- Strömungsverbinden der Hohlraumstruktur (22) des Einlegeteils (20) mit einem, insbesondere zur Kühlung der elektrischen Maschine (12) vorgesehenen, Kühlkreislauf.

10. Fahrzeug, insbesondere Elektrofahrzeug, mit mindestens einer Antriebsanordnung nach einem der Ansprüche 1 bis 7.

## Claims

1. Drive assembly (10) for a vehicle, in particular for an electric vehicle, comprising:
- at least one electric machine (12) for generating a torque,
- at least one gearbox (14) coupled to the electric machine (12) for transmitting and/or transferring the torque generated by the electric machine (12),
- a housing (16) in which the electric machine (12) and the gearbox (14) are arranged, wherein an intermediate wall (18) of the housing (16) is arranged between the electric machine (12) and the gearbox (14), **characterized in that**
- at least one insert part (20) which is cast into the housing (16) and has at least one, in particular self-contained, cavity structure (22) for producing at least one cooling duct (24), wherein the insert part (20) is arranged on or in the intermediate wall (18) of the housing (16).

2. Drive assembly (10) according to Claim 1, **characterized in that** the insert part (20) has a flat basic body (26).

3. Drive assembly (10) according to Claim 2, **characterized in that** the insert part (20) has an extension arm (28), wherein the extension arm (28) protrudes from the basic body (26), in particular is oriented orthogonally to the basic body (26).

4. Drive assembly (10) according to any one of the preceding claims, **characterized in that** the insert part (20) has at least one opening (30), in particular a plurality of openings (30), wherein the opening (30) passes through the insert part (20) outside the cavity structure (22), wherein the opening (30) in particular is completely arranged in the basic body (26) of the insert part (20).

5. Drive assembly (10) according to any one of the preceding claims, **characterized in that** the insert part (20) is produced from two metal sheets joined together.

6. Drive assembly (10) according to any one of Claims 1 to 4, **characterized in that** the insert part (20) is a component produced by internal high pressure and/or hydroforming.

7. Drive assembly (10) according to any one of the preceding claims, **characterized in that** the drive assembly (10) comprises a cooling circuit for cooling the electric machine (12), wherein the cooling duct (24) produced by the insert part (20) is connected in terms of flow to the cooling circuit of the electric machine (12).

8. Method for producing a drive assembly (10) according to any one of the preceding claims,
comprising the steps of:
- providing an electric machine (12) for generating a torque;
- providing a gearbox (14) coupled to the electric machine (12) for transmitting and/or transferring the torque generated by the electric machine (12);
- providing a housing (16) for accommodating the electric machine (12) and the gearbox (14);
- providing an insert part (20) with at least one, in particular self-contained, cavity structure (22) for producing at least one cooling duct (24);
- filling the cavity structure (22) with a filling medium, in particular with metallic powder;
- casting the insert part (20) into the housing (16), in particular into an intermediate wall (18) of the housing (16);
- opening up the cavity structure (22) of the insert part (20) by drilling and/or milling; and
- removing the filling medium from the cavity structure (22) of the insert part (20).

9. Method according to Claim 8, **characterized in that** the method further comprises the step of:
- connecting the cavity structure (22) of the insert part (20) in terms of flow to a cooling circuit, in particular provided for cooling the electric machine (12).

10. Vehicle, in particular electric vehicle, having at least one drive assembly according to one of Claims 1 to 7.

## Revendications

1. Système d'entraînement (10) pour un véhicule, notamment pour un véhicule électrique, comprenant :
- au moins un moteur électrique (12), pour générer un couple de rotation,
- au moins une transmission (14), reliée au moteur électrique (12) pour transmettre et/ou démultiplier le couple généré par le moteur électrique (12),
- un boîtier (16), dans lequel sont agencés le moteur électrique (12) et la transmission (14), une paroi intermédiaire (18) du boîtier (16) étant agencée entre le moteur électrique (12) et la transmission (14), **caractérisé en ce que**
- au moins une pièce d'insertion (20) moulée dans le boîtier (16) ayant au moins une structure creuse (22), en particulier fermée sur elle-même, pour constituer au moins un canal de refroidissement (24), la pièce d'insertion (20) étant agencée sur ou dans la paroi intermédiaire (18) du boîtier (16).

2. Système d'entraînement (10) selon la revendication 1, **caractérisé en ce que** la pièce d'insertion (20) présente un corps de base (26) plat.

3. Système d'entraînement (10) selon la revendication 2, **caractérisé en ce que** la pièce d'insertion (20) présente un bras (28), le bras (28) dépassant du corps de base (26), en particulier étant orienté orthogonalement au corps de base (26).

4. Système d'entraînement (10) selon l'une des revendications précédentes, **caractérisé en ce que** la pièce d'insertion (20) présente au moins un passage (30), en particulier plusieurs passages (30), le passage (30) traversant la pièce d'insertion (20) à l'extérieur de la structure creuse (22), le passage (30) étant en particulier entièrement agencé dans le corps de base (26) de la pièce d'insertion (20).

5. Système d'entraînement (10) selon l'une des revendications précédentes, **caractérisé en ce que** la pièce d'insertion (20) est fabriquée à partir de deux plaques assemblées.

6. Système d'entraînement (10) selon l'une des revendications 1 à 4, **caractérisé en ce que** la pièce d'insertion (20) est une pièce fabriquée par haute pression interne et/ou hydroformage.

7. Système d'entraînement (10) selon l'une des revendications précédentes, **caractérisé en ce que** le système d'entraînement (10) comprend un circuit de refroidissement pour refroidir le moteur électrique (12), le canal de refroidissement (24) constitué par la pièce d'insertion (20) étant en communication fluidique avec le circuit de refroidissement du moteur électrique (12).

8. Procédé de production d'un dispositif d'entraînement (10) selon l'une des revendications précédentes,
comprenant les étapes suivantes :
- fournir un moteur électrique (12) pour générer un couple de rotation ;
- fournir une transmission (14) reliée au moteur électrique (12) pour transmettre et/ou démultiplier le couple généré par le moteur électrique (12) ;
- fournir un boîtier (16) destiné à recevoir le moteur électrique (12) et la transmission (14) ;
- fournir une pièce d'insertion (20) ayant au moins une structure creuse (22), en particulier fermée sur elle-même, pour constituer au moins un canal de refroidissement (24) ;
- remplir la structure creuse (22) avec un agent de remplissage, en particulier avec une poudre métallique ;
- couler la pièce d'insertion (20) dans le boîtier (16), en particulier dans une paroi intermédiaire (18) du boîtier (16) ;
- percer et/ou fraiser la structure de la cavité (22) de la pièce d'insertion (20) ; et
- éliminer le milieu de remplissage de la structure creuse (22) de la pièce d'insertion (20).

9. Procédé selon la revendication 8, **caractérisé en ce que** le procédé comprend en outre l'étape consistant à :
- relier la structure creuse (22) de la pièce d'insertion (20) à un circuit de refroidissement, notamment destiné à refroidir le moteur électrique (12).

10. Véhicule, notamment électrique, comprenant au moins un ensemble d'entraînement selon l'une des revendications 1 à 7.
